(19) Europäisches Patentamt
European Patent Office
Office européen des brevets

(11) **EP 4 353 764 A1**

(12) **EUROPEAN PATENT APPLICATION**
published in accordance with Art. 153(4) EPC

(43) Date of publication:
**17.04.2024 Bulletin 2024/16**

(21) Application number: **22820491.3**

(22) Date of filing: **03.06.2022**

(51) International Patent Classification (IPC):
**C08G 18/42** (2006.01)   **C08G 18/10** (2006.01)

(52) Cooperative Patent Classification (CPC):
**C08G 18/10; C08G 18/42**

(86) International application number:
**PCT/KR2022/007922**

(87) International publication number:
**WO 2022/260363 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.06.2021 KR 20210073790**

(71) Applicant: **SK pucore co., ltd.**
**Ulsan, 44782 (KR)**

(72) Inventors:
• **HONG, Jeong Min**
**Ulsan 44782 (KR)**
• **RYU, Jung Ho**
**Ulsan 44782 (KR)**
• **HAN, Ho Seok**
**Ulsan 44782 (KR)**

(74) Representative: **Dehns**
**St. Bride's House**
**10 Salisbury Square**
**London EC4Y 8JD (GB)**

(54) **POLYURETHANE FOAM AND MANUFACTURING METHOD THEREFOR**

(57) The present invention provides a polyurethane foam and a manufacturing method therefor, the polyurethane foam being a reaction product of a polyester polyol and an isocyanate and having a flame retardancy index (FRI) of 130 or less, wherein the polyester polyol is formed from a composition comprising an alcohol and two or more types of aromatic carboxylic acid including isophthalic acid and phthalic acid. The polyurethane foam can have both improved flame retardancy and heat resistance, and has total heat release and total smoke release that are significantly lower than those of a conventional polyurethane foam, and thus has an excellent fire protection effect when used as an interior material for buildings and low toxic gas generation.

[Fig. 1]

**S100**

**S110**
Polycondensing a composition comprising two or more aromatic carboxylic acids and an alcohol to obtain a polyester polyol

**S120**
Mixing the polyester polyol with a catalyst, a foam stabilizer, and a foaming agent to obtain a polyester polyol mixture

**S130**
Reacting the polyester polyol mixture with an isocyanate to obtain a polyurethane foam

Preparation of a polyurethane foam

EP 4 353 764 A1

**Description**

**Technical Field**

The present invention relates to a polyurethane foam and to a process for preparing the same.

**Background Art**

Polyurethane foam is lightweight and has excellent insulation, soundproofing, and molding processability; thus, it is widely used as building insulation materials, sound-absorbing materials, and insulation materials. In particular, high flame retardancy is required for interior materials of buildings and interior sound-absorbing materials of special vehicles. In order to enhance the flame retardancy of polyurethane foam, various studies have been conducted, such as laminating a flame-retardant sheet on one side of a polyurethane foam to impart flame retardancy.

However, laminating a flame-retardant sheet does not fundamentally impart flame retardancy to a polyurethane foam; thus, the flame-retardant effect is limited. The manufacturing process is complicated, and the manufacturing costs are high.

In addition, various studies have been conducted to prepare a polyurethane foam by appropriately selecting a polyester polyol and an isocyanate and modifying the process conditions.

For example, a polyester polyol prepared using phthalic anhydride (PA) is used as the main resin of widely used rigid polyurethane foams (PUR/PIR), but it has the problem of poor flame retardancy. To improve this flame retardancy problem, a polyester polyol prepared using phthalic anhydride and polyethylene terephthalate or dimethyl phthalate is used. Although flame retardancy has been improved to some extent, there is a problem in that the amount of heat released or smoke density still increases, along with poor thermal resistance.

Accordingly, research is needed to stably secure flame retardancy and thermal resistance.

[Prior Art Document]

[Patent Document]

(Patent Document 1) Korean Patent No. 10-1876936

**Detailed Description of the Invention**

**Technical Problem**

An object of the present invention is to provide a polyurethane foam that can enhance flame retardancy and thermal resistance at the same time and, in particular, reduce the total amount of heat released and the total amount of smoke released during combustion, and a process for preparing the same.

**Solution to the Problem**

The present invention provides a polyurethane foam that is a reaction product of a polyester polyol and an isocyanate, wherein the polyester polyol is formed from a composition comprising two or more aromatic carboxylic acids comprising isophthalic acid and phthalic acid and an alcohol, and the flame retardant index (FRI) represented by the following Equation 1 is 130 or less:

$$[\text{Equation 1}]$$

$$FRI = T_{HR} + T_{SR}$$

In Equation 1,

$T_{HR}$ and $T_{SR}$ are values, excluding units, measured with a specimen containing a polyurethane foam having a size of 100 mm in width $\times$ 100 mm in length $\times$ 50 mm in thickness, respectively.
$T_{HR}$ is the total amount of heat released ($MJ/m^2$) for 10 minutes after the initiation of heating at 50 $kW/m^2$ using a cone calorimeter tester according to ISO 5660-1, and $T_{SR}$ is the total amount of smoke released ($m^2/m^2$) for 10 minutes after the initiation of heating at 50 $kW/m^2$ using a cone calorimeter tester according to ISO 5660-1.

In addition, the present invention provides a process for preparing a polyurethane foam that comprises polycondensing a composition comprising two or more aromatic carboxylic acids comprising isophthalic acid and phthalic acid and an alcohol to obtain a polyester polyol; mixing the polyester polyol with a catalyst, a foam stabilizer, and a foaming agent to obtain a polyester polyol mixture; and reacting the polyester polyol mixture with an isocyanate to obtain a polyurethane foam, wherein the flame retardant index (FRI) represented by the above Equation 1 is 130 or less.

**Advantageous Effects of the Invention**

The polyurethane foam according to an embodiment can enhance flame retardancy and thermal resistance at the same time. In particular, since the total amount of heat released and the total amount of smoke released during combustion are low, it produces an excellent fire prevention effect and reduces the release of toxic gases when used as an interior material for buildings.

In addition, the process for preparing a polyurethane foam according to an embodiment can provide a polyurethane foam having the above excellent effects in a simple, economical, and efficient manner.

**Brief Description of the Drawings**

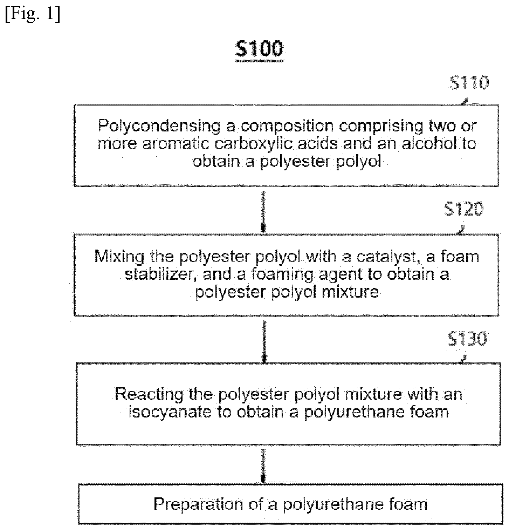

Fig. 1 schematically shows the process for preparing a polyurethane foam according to an embodiment.

**Best Mode for Carrying out the Invention**

Hereinafter, the present invention is described in detail. The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about," unless otherwise indicated.

As used herein, a "mixture thereof" means that two or more substances are contained. The "mixture" may cover a uniformly and/or non-uniformly mixed state, a dissolved state, and a uniformly and/or non-uniformly dispersed state, but it is not limited thereto.

In an embodiment, there is provided a polyurethane foam, which is a reaction product of a polyester polyol and an isocyanate, wherein the polyester polyol is formed from a composition comprising two or more aromatic carboxylic acids comprising isophthalic acid and phthalic acid and an alcohol, and the flame retardant index (FRI) represented by the following Equation 1 is 130 or less:

$$[\text{Equation 1}]$$

$$FRI = T_{HR} + T_{SR}$$

In Equation 1,

$T_{HR}$ and $T_{SR}$ are values, excluding units, measured with a specimen containing a polyurethane foam having a size of 100 mm in width $\times$ 100 mm in length $\times$ 50 mm in thickness, respectively.

$T_{HR}$ is the total amount of heat released ($MJ/m^2$) for 10 minutes after the initiation of heating at 50 $kW/m^2$ using a cone calorimeter tester according to ISO 5660-1, and $T_{SR}$ is the total amount of smoke released ($m^2/m^2$) for 10 minutes after the initiation of heating at 50 $kW/m^2$ using a cone calorimeter tester according to ISO 5660-1.

As the polyurethane foam is formed from a composition comprising two or more aromatic carboxylic acids comprising isophthalic acid and phthalic acid, it can enhance flame retardancy and thermal resistance at the same time. In particular, the technical significance lies in that the flame retardant index (FRI) of the polyurethane foam is controlled to 130 or less, whereby the total amount of heat released and the total amount of smoke released during combustion can be significantly reduced, and thermal stability can be further enhanced.

Hereinafter, the polyurethane foam according to an embodiment will be described in detail.

**Polyurethane foam**

The polyurethane foam according to an embodiment is a reaction product of a polyester polyol and an isocyanate,

wherein the polyester polyol is formed from a composition comprising two or more aromatic carboxylic acids comprising isophthalic acid and phthalic acid and an alcohol.

Specifically, the polyester polyol contained in the composition for forming a polyurethane foam may be produced through a polycondensation reaction of aromatic carboxylic acids and an alcohol.

Phthalic acid, as the aromatic carboxylic acid, can be readily purchased on the market and is advantageous in maintaining thermal stability, whereas it has the disadvantage of being very high in the total amount of heat released and the total amount of smoke released during combustion. Accordingly, when isophthalic acid is used together with phthalic acid, the above problem can be resolved, and thermal resistance and flame retardancy can be enhanced at the same time.

Isophthalic acid is a colorless solid and is an isomer of phthalic acid and terephthalic acid. Isophthalic acid has the advantages of excellent chemical resistance, thermal resistance, and mechanical strength, along with a reduction in the total amount of heat released and the total amount of smoke released during combustion.

When phthalic acid alone is employed as the aromatic carboxylic acid, the total amount of heat released and the total amount of smoke released during combustion may increase, and the weight residual ratio of a polyurethane foam may significantly decrease at high temperatures.

Meanwhile, when isophthalic acid alone is employed as the aromatic carboxylic acid, moldability may be deteriorated due to high viscosity, and there may be limitations in enhancing thermal resistance and flame retardancy at the same time.

When both phthalic acid and isophthalic acid are employed as the aromatic carboxylic acid according to an embodiment of the present invention, a polyurethane foam produced therefrom has excellent thermal stability, resulting in enhanced thermal resistance, and excellent flame retardancy. In particular, it has great advantages in that since the total amount of heat released and the total amount of smoke released during combustion can be reduced, the thermal resistance and flame retardancy of a polyurethane foam can be enhanced at the same time, and the release of toxic gas can be reduced.

According to an embodiment of the present invention, in order to optimally enhance the thermal resistance and flame retardancy of a polyurethane foam, the contents of isophthalic acid and phthalic acid may be important.

Specifically, the molar ratio of isophthalic acid and phthalic acid may be, for example, 7.5 to 9.5:0.5 to 2.5, for example, 8.2 to 9.5:0.5 to 1.8, for example, 8.5 to 9.5:0.5 to 1.5, or, for example, 8.8 to 9.2:0.8 to 1.2.

When the molar ratio of isophthalic acid and phthalic acid satisfies the above range, thermal resistance and flame retardancy can be further enhanced.

According to an embodiment of the present invention, at least one selected from the group consisting of terephthalic acid, dimethyl phthalate, and polyethylene terephthalate may be further employed as the aromatic carboxylic acid in addition to isophthalic acid and phthalic acid.

Meanwhile, the alcohol may comprise at least one selected from the group consisting of diethylene glycol (DEG), methyl ethyl glycol (MEG), 2-methyl-1,3-propanediol, triethylene glycol (TEG), 1,4-cyclohexanedimethanol, neopentyl glycol, and trimethylolpropane. Specifically, the alcohol may comprise at least one selected from the group consisting of diethylene glycol (DEG) and methyl ethyl glycol (MEG). More specifically, the alcohol may comprise diethylene glycol (DEG).

The equivalent ratio of the aromatic carboxylic acids to the alcohol may be, for example, 1: 1.2 to 2.5, for example, 1: 1.2 to 2.3, for example, 1: 1.2 to 2.2, for example, 1: 1.25 to 2.0, for example, 1: 1.3 to 1.95, for example, 1: 1.5 to 1.95, or, for example, 1:1.5 to 1.9.

When the equivalence ratio of the aromatic carboxylic acids to the alcohol satisfies the above range, thermal stability is excellent, resulting in enhanced thermal resistance, and flame retardancy is excellent. In particular, since the total amount of heat released and the total amount of smoke released during combustion can be reduced, the thermal resistance and flame retardancy of a polyurethane foam can be enhanced at the same time.

If the content of the alcohol is too small, the viscosity may increase excessively, making the synthesis difficult. If the content of the aromatic carboxylic acids is too small, the effect of enhancing thermal resistance and flame retardancy may be reduced.

According to an embodiment of the present invention, the molar ratio of the isophthalic acid to the phthalic acid is adjusted to, for example, 9:1, and the equivalent ratio of the aromatic carboxylic acids to the alcohol is adjusted to the above range to optimize thermal resistance and flame retardancy.

For example, aromatic carboxylic acids comprising isophthalic acid and phthalic acid in an amount at a molar ratio of, for example, 9:1 are used, and the equivalent ratio of the aromatic carboxylic acids to the alcohol is adjusted to, for example, 1:1.2 to 2.5, 1:1.25 to 2.0, or, for example, 1:1.3 to 1.95 to optimize thermal resistance and flame retardancy.

Meanwhile, the polyester polyol may have a hydroxyl value (OHv) of 150 mg KOH/g to 380 mg KOH/g. The hydroxyl value (OHv) may vary depending on the content of alcohol, and it may be adjusted to optimize thermal resistance and flame retardancy. Specifically, the hydroxyl value (OHv) may increase as the alcohol content increases and may decrease as the alcohol content decreases.

Specifically, the hydroxyl value (OHv) of the polyester polyol may be, for example, 150 mg KOH/g to 350 mg KOH/g, for example, 180 mg KOH/g to 340 mg KOH/g, for example, 200 mg KOH/g to 320 mg KOH/g, for example, 200 mg KOH/g to 300 mg KOH/g, for example, 200 mg KOH/g to 280 mg KOH/g, or 200 mg KOH/g to 250 mg KOH/g.

Meanwhile, the hydroxyl value (OHv) refers to the number of mg of NaOH required to neutralize acetic acid bound to a hydroxyl group when acetylating 1 g of a sample. It may be measured according to ASTM E222-10.

According to an embodiment of the present invention, when the hydroxyl value (OHv) of the polyester polyol satisfies the above range, not only can it have excellent thermal resistance, but the total amount of heat released and the total amount of smoke released during combustion can also be lowered at a certain range or lower. Thus, the effect according to an embodiment of the present invention can be effectively achieved.

If the hydroxyl value (OHv) of the polyester polyol is less than the above range, the viscosity may increase excessively, making the synthesis difficult. If the hydroxyl value (OHv) of the polyester polyol is too large, the effect of enhancing thermal resistance and flame retardancy may be reduced.

According to an embodiment of the present invention, when the hydroxyl value (OHv) of the polyester polyol is about 200 mg KOH/g, the equivalent ratio of the aromatic carboxylic acids comprising isophthalic acid and phthalic acid in an amount at a molar ratio of, for example, 9:1 to the alcohol may be, for example, 1:1.5 to 1.6.

According to another embodiment of the present invention, when the hydroxyl value (OHv) of the polyester polyol is about 250 mg KOH/g, the equivalent ratio of the aromatic carboxylic acids comprising isophthalic acid and phthalic acid in an amount at a molar ratio of, for example, 9:1 to the alcohol may be, for example, 1:1.7 to 1.8.

According to another embodiment of the present invention, when the hydroxyl value (OHv) of the polyester polyol is about 300 mg KOH/g, the equivalent ratio of the aromatic carboxylic acids comprising isophthalic acid and phthalic acid in an amount at a molar ratio of, for example, 9:1 to the alcohol may be, for example, 1:1.9 to 2.0.

Meanwhile, the polyester polyol may have an average of 2 to 2.5 functional groups. Because of the high viscosity of the polyester polyol, it is preferable to use a polyester polyol having a low average functional group within the above range. In such a case, since the total amount of heat released and the total amount of smoke released can be lowered at a certain range or lower, the effect according to an embodiment of the present invention can be effectively achieved.

The polyester polyol may have a weight average molecular weight (Mw) of, for example, 350 g/mole to 750 g/mole, for example, 400 g/mole to 700 g/mole, for example, 450 g/mole to 650 g/mole, or, for example, 400 g/mole to 500 g/mole. The weight average molecular weight (Mw) may be measured by gel permeation chromatography (GPC). If the polyester polyol has a weight average molecular weight (Mw) that satisfies the above range, the effect according to an embodiment of the present invention can be effectively achieved.

Meanwhile, when the polyester polyol is heated from room temperature to 800°C at a temperature elevation rate of 20°C/minute using a thermogravimetric analyzer (TGA), the temperature (°C) at which the weight reduction of the polyester polyol is 50% may be, for example, 380°C to 450°C, for example, 400°C to 450°C, or, for example, 400°C to 440°C. Here, the thermogravimetric analysis (TGA) measurement may be carried out under a nitrogen atmosphere.

Meanwhile, according to an embodiment of the present invention, the thermal resistance of the polyester polyol itself may vary depending on the hydroxyl value (OHv) of the polyester polyol. Specifically, the temperature (°C) at which the weight reduction of the polyester polyol is 50% may vary depending on the hydroxyl value (OHv) of the polyester polyol.

For example, when the hydroxyl value (OHv) of the polyester polyol is about 150 mg KOH/g, the temperature (°C) at which the weight reduction of the polyester polyol is 50% may be about 410°C to 440°C.

For example, when the hydroxyl value (OHv) of the polyester polyol is about 200 mg KOH/g, the temperature (°C) at which the weight reduction of the polyester polyol is 50% may be about 410°C to 440°C.

For example, when the hydroxyl value (OHv) of the polyester polyol is about 250 mg KOH/g, the temperature (°C) at which the weight reduction of the polyester polyol is 50% may be about 390°C to 430°C.

For example, when the hydroxyl value (OHv) of the polyester polyol is about 300 mg KOH/g, the temperature (°C) at which the weight reduction of the polyester polyol is 50% may be about 380°C to 420°C.

For example, when the hydroxyl value (OHv) of the polyester polyol is about 350 mg KOH/g, the temperature (°C) at which the weight reduction of the polyester polyol is 50% may be about 380°C to 420°C.

The temperature (°C) at which the weight reduction of the polyester polyol is 50% may have an error range of about ±10°C, for example, ±5°C, depending on the environment or conditions.

Meanwhile, the polyurethane foam according to an embodiment of the present invention has a flame retardant index (FRI) of 130 or less as represented by the following Equation 1.

[Equation 1]

$$FRI = T_{HR} + T_{SR}$$

In Equation 1,

$T_{HR}$ and $T_{SR}$ are values, excluding units, measured with a specimen containing a polyurethane foam having a size of 100 mm in width × 100 mm in length × 50 mm in thickness, respectively.

$T_{HR}$ is the total amount of heat released (MJ/m$^2$) for 10 minutes after the initiation of heating at 50 kW/m$^2$ using a cone calorimeter tester according to ISO 5660-1, and $T_{SR}$ is the total amount of smoke released (m$^2$/m$^2$) for 10 minutes after the initiation of heating at 50 kW/m$^2$ using a cone calorimeter tester according to ISO 5660-1.

The flame retardant index (FRI) of the polyurethane foam may be, for example, 128 or less, for example, 125 or less, for example, 124 or less, for example, 122 or less, for example, 120 or less, for example, 118 or less, for example, 115 or less, for example, 114 or less, for example, 112 or less, for example, 110 or less, for example, 105 or less, for example, 100 or less, for example, 98 or less, for example, 95 or less, for example, 90 or less, for example, 88 or less, for example, 86 or less, or, for example, 85 or less.

The flame retardant index (FRI) represented by Equation 1 stands for the sum of the total amount of heat released ($T_{HR}$) and the total amount of smoke released ($T_{SR}$) of the polyurethane foam, which may be an indicator of the flame retardancy of the polyurethane foam and the degree of toxicity upon combustion. Thus, the lower the flame retardant index (FRI) of the polyurethane foam, the better the flame retardancy, and the lower the smoke density during combustion, whereby the release of toxic gases may be reduced.

Specifically, the lower the total amount of heat released ($T_{HR}$), the lower the flame retardant index (FRI). The higher the total amount of heat released ($T_{HR}$), the higher the flame retardant index (FRI). In addition, the lower the total amount of smoke released ($T_{SR}$), the lower the flame retardant index (FRI). The higher the total amount of smoke released ($T_{SR}$), the higher the flame retardant index (FRI).

The total amount of heat released ($T_{HR}$) of the polyurethane foam is a value, excluding a unit, measured with a specimen comprising a polyurethane foam having a size of 100 mm in width × 100 mm in length × 50 mm in thickness. It is the total amount of heat released (MJ/m$^2$) for 10 minutes after the initiation of heating at 50 kW/m$^2$ using a cone calorimeter tester according to ISO 5660-1.

The total amount of heat released ($T_{HR}$) of the polyurethane foam may be, for example, 8 to 12 MJ/m$^2$, for example, 8 to 11.5 MJ/m$^2$, for example, 8 to 11 MJ/m$^2$, for example, 8 to 10 MJ/m$^2$, for example, 8 to 9.7 MJ/m$^2$, or, for example, 8.5 to 9.5 MJ/m$^2$.

The total amount of smoke released ($T_{SR}$) of the polyurethane foam is a value, excluding a unit, measured with a specimen comprising a polyurethane foam having a size of 100 mm in width × 100 mm in length × 50 mm in thickness. It is the total amount of smoke released (m$^2$/m$^2$) for 10 minutes after the initiation of heating at 50 kW/m$^2$ using a cone calorimeter tester according to ISO 5660-1.

The total amount of smoke released ($T_{SR}$) of the polyurethane foam may be, for example, 125 m$^2$/m$^2$ or less, for example, 123 m$^2$/m$^2$ or less, for example, 122 m$^2$/m$^2$ or less, for example, 120 m$^2$/m$^2$ or less, for example, 118 m$^2$/m$^2$ or less, for example, 115 m$^2$/m$^2$ or less, for example, 105 m$^2$/m$^2$ or less, for example, 103 m$^2$/m$^2$ or less, for example, 100 m$^2$/m$^2$ or less, for example, 98 m$^2$/m$^2$ or less, for example, 95 m$^2$/m$^2$ or less, for example, 90 m$^2$/m$^2$ or less, or, for example, 88 m$^2$/m$^2$ or less.

When the total amount of heat released ($T_{HR}$) and the total amount of smoke released ($T_{SR}$) of the polyurethane foam each satisfy the above ranges, it can be more advantageous for achieving the desired flame retardant index (FRI) of the polyurethane foam according to an embodiment of the present invention, flame retardancy can be further enhanced, and toxic gas generation due to smoke release during combustion can be reduced.

Meanwhile, the polyurethane foam may have a thermal stabilization index (TSI) of 30 or less as represented by the following Equation 2.

[Equation 2]

$$Thermal\ stabilization\ index\ (TSI) = \frac{FRI}{T_{50}} \times 100$$

In Equation 2,
FRI stands for the flame retardant index (FRI) of the polyurethane foam, and $T_{50}$ is the temperature (°C) at which the weight reduction of the polyurethane foam is 50% when the polyurethane foam is heated from room temperature to 800°C at a temperature elevation rate of 20°C/minute using a thermogravimetric analyzer (TGA), which is a value excluding a unit. Here, the thermogravimetric analysis (TGA) measurement may be carried out under a nitrogen atmosphere.

The thermal stabilization index (TSI) of the polyurethane foam may be, for example, 30 or less, for example, 29 or less, for example, 28 or less, for example, 27 or less, for example, 25 or less, for example, 24 or less, for example, 23 or less, for example, 22 or less, for example, 20 or less, for example, 19 or less, or, for example, 18 or less.

The thermal stabilization index (TSI) represented by the above Equation 2 is a value in percentage obtained by dividing the flame retardant index (FRI) of the polyurethane foam by the temperature (°C) at which the weight reduction of the polyurethane foam is 50% when it is heated from room temperature to 800°C at a temperature elevation rate of 20°C/minute. It may be a composite indicator of the flame retardancy and thermal resistance of the polyurethane foam. Thus, as the thermal stabilization index (TSI) of the polyurethane foam is lower, flame retardancy and thermal resistance can be enhanced at the same time.

Specifically, the lower the flame retardant index (FRI), the lower the thermal stabilization index (TSI). The higher the flame retardant index (FRI), the higher the thermal stabilization index (TSI). In addition, the higher the temperature (°C) at which the weight reduction of the polyurethane foam is 50% when it is heated from room temperature to 800°C at a temperature elevation rate of 20°C/minute, the lower the thermal stabilization index (TSI). The lower the temperature (°C) at which the weight reduction of the polyurethane foam is 50%, the higher the thermal stabilization index (TSI).

The temperature (°C) at which the weight reduction of the polyurethane foam is 50% is the temperature (°C) at which the weight reduction of the polyurethane foam is 50% when the polyurethane foam is heated from room temperature to 800°C at a temperature elevation rate of 20°C/minute using a thermogravimetric analyzer (TGA), which is a value excluding a unit. Here, the thermogravimetric analysis (TGA) measurement may be carried out under a nitrogen atmosphere.

In Equation 2, the flame retardant index (FRI) is as described above.

In addition, the temperature (°C) at which the weight reduction of the polyurethane foam is 50% may be, for example, 460°C to 600°C, for example, 460°C to 580°C, for example, 460°C to 550°C, for example, 460°C to 520°C, for example, 460°C to 500°C, or, for example, 460°C to 490°C. If the temperature (°C) at which the weight reduction of the polyurethane foam is 50% satisfies the above range, thermal stability at high temperatures is excellent, resulting in further enhanced thermal resistance.

If the flame retardant index (FRI) of the polyurethane foam and the temperature (°C) at which the weight reduction thereof is 50% each satisfy the above ranges, it can be more advantageous for achieving the desired flame retardant index (FRI) of the polyurethane foam according to an embodiment of the present invention. In such a case, the effect of simultaneously enhancing thermal resistance and flame retardancy can be produced.

Meanwhile, the polyurethane foam may have a weight residual ratio ($WR_{600}$) of 38% or more as represented by the following Equation 3:

[Equation 3]

$$Weight\ residual\ ratio\ (WR_{600}, \%) = \frac{W_{25} - W_{600}}{W_{25}} \times 100$$

In Equation 3, $W_{25}$ is the initial weight of a polyurethane foam at 25°C, and $W_{600}$ is the weight of the polyurethane foam after the temperature is raised from 25°C to 600°C at a rate of 20°C/minute and it stands at 600°C for 2 minutes.

The weight residual ratio ($WR_{600}$) of a polyurethane foam represented by Equation 3 is a value in percentage of the weight residual ratio of the polyurethane foam at a temperature of 600°C. It is a rate of change in weight between the initial weight of a polyurethane foam and the weight of the polyurethane foam after the temperature is raised to 600°C at a rate of 20°C/minute and it stands at 600°C for 2 minutes relative to the initial weight of the polyurethane foam, which is a value in percentage.

The weight residual ratio ($WR_{600}$, %) may be, for example, 38% or more, for example, 39% or more, for example, 39.5% or more, for example, 39.9% or more, or for example, 40% or more. Specifically, the weight residual ratio ($WR_{600}$, %) may be 38% to 60%, 39% to 55%, or 39% to 50%. If the weight residual ratio ($WR_{600}$) satisfies 38% or more, the rate of change in the weight of the polyurethane foam is small at a high temperature of 600°C or higher, whereby the thermal properties are enhanced, thereby further enhancing the thermal resistance of the polyurethane foam.

According to an embodiment, the polyurethane foam may be a rigid polyurethane foam having an average density of 35 g/cm$^3$ to 55 g/cm$^3$. For example, the polyurethane foam may be a rigid polyurethane foam having an average density of 35 g/cm$^3$ to 55 g/cm$^3$, 35 g/cm$^3$ to 50 g/cm$^3$, 35 g/cm$^3$ to 45 g/cm$^3$, 40 g/cm$^3$ to 50 g/cm$^3$, or 40 g/cm$^3$ to 45 g/cm$^3$.

According to an embodiment of the present invention, when the hydroxyl value (OHv) of the polyester polyol is about 250 mg KOH/g, the polyurethane foam may satisfy at least one of the following characteristics: the flame retardant index (FRI) is less than 100, the thermal stabilization index (TSI) is 20 or less, the total amount of heat released ($T_{HR}$) is 8.5 MJ/m$^2$ to 9.5 MJ/m$^2$, the total amount of smoke released ($T_{SR}$) is 78 m$^2$/m$^2$ to less than 100 m$^2$/m$^2$, and the temperature ($T_{50}$) at which the weight reduction of the polyurethane foam is 50% is 450°C to 500°C when the polyurethane foam is heated from room temperature to 800°C at a temperature elevation rate of 20°C/minute using a thermogravimetric analyzer (TGA). When the hydroxyl value (OHv) of the polyester polyol is about 250 mg KOH/g, the polyurethane foam may satisfy at least one, at least two, for example, at least three, for example, at least four, for example, all of the above characteristics. In such a case, the polyurethane foam satisfies the thermal resistance and flame retardancy at the same time; thus, it may be more advantageous for providing a foam that produces optimal effects.

The composition and physical properties of the polyurethane foam according to an embodiment can be efficiently achieved by preparing the polyurethane foam using the process for preparing a polyurethane foam according to an embodiment.

Hereinafter, the process for preparing a polyurethane foam will be described in detail.

## Process for preparing a polyurethane foam

The process for preparing a polyurethane foam according to an embodiment comprises polycondensing a composition comprising two or more aromatic carboxylic acids comprising isophthalic acid and phthalic acid and an alcohol to obtain a polyester polyol; mixing the polyester polyol with a catalyst, a foam stabilizer, and a foaming agent to obtain a polyester polyol mixture; and reacting the polyester polyol mixture with an isocyanate to obtain a polyurethane foam, wherein the flame retardant index (FRI) represented by the above Equation 1 is 130 or less.

In the process for preparing a polyurethane foam according to an embodiment of the present invention, a polyester polyol obtained by polycondensing a composition comprising two or more aromatic carboxylic acids, comprising isophthalic acid and phthalic acid, and an alcohol is used. Thus, it is possible to provide a polyurethane foam having enhanced thermal resistance and flame retardancy in a simple, economical, and efficient manner.

Referring to Fig. 1, the process for preparing a polyurethane foam (S100) may comprise polycondensing a composition comprising two or more aromatic carboxylic acids comprising isophthalic acid and phthalic acid and an alcohol to obtain a polyester polyol (S1 10).

Specifically, the mixing ratio of isophthalic acid and phthalic acid, and the types and mixing equivalent ratios of the aromatic carboxylic acids and alcohol are as described above.

The polycondensation reaction may be carried out at 180 to 250°C for 6 to 24 hours.

The process for preparing a polyurethane foam (S100) may comprise mixing the polyester polyol with a catalyst, a foam stabilizer, and a foaming agent to obtain a polyester polyol mixture (S120).

The catalyst may comprise a substance that produces a tertiary amine such as sodium hydroxide, sodium acetate, tertiary amine or trimethyl amine, triethylene diamine, N-methyl morpholine, N,N-dimethyl cyclohexylamine, and N,N-dimethyl aminoethanol. For example, it may comprise at least one selected from the group consisting of metal compounds such as hydrocarbon tin alkyl carboxylates, dibutyltin diacetate, dibutyltin dioctoate, dibutyltin dilaurate, and stannous octoate, 2,4,6-tris(N,N-dimethylaminomethyl)phenol, 1,3,5-tris(N,N-dimethyl-3-aminopropyl)-S-hexahydrotriazine, potassium octoate, and potassium acetate.

The content of the catalyst may be, for example, 0.0001 to 10% by weight, for example, 0.0001 to 8% by weight, for example, 0.0005 to 5% by weight, for example, 0.0005 to 3% by weight, for example, 0.0005 to 2% by weight, for example, 0.001 to 1% by weight, for example, 0.001 to 0.7% by weight, for example, 0.001 to 0.5% by weight, or, 0.5 to 2% by weight, based on the total weight of the polyester polyol mixture.

The foam stabilizer facilitates mixing, enhances the stability and fluidity of foam, thereby improving fillability during foaming, and ensures uniformity of a foamed product. For example, a silicone foam stabilizer may be used, but it is not limited thereto.

The content of the foam stabilizer may be, for example, 1 to 5% by weight, for example, 1 to 4% by weight, for example, 1 to 3% by weight, for example, 3 to 4% by weight, for example, 3 to 5% by weight, or, for example, 1 to 2.5% by weight, based on the total weight of the polyester polyol mixture.

The foaming agent may be at least one selected from the group consisting of water, methylal, i-pentane, c-pentane, n-pentane, hydrogenated chlorofluorocarbons (HFC, HCFC), and hydrogenated fluoroolefins (HFO). For example, it is preferable to use water, but it is not limited thereto.

In addition, the content of the foaming agent may be 1% by weight to 20% by weight, 5% by weight to 15% by weight, or 8% by weight to 12% by weight, based on the total weight of the polyester polyol mixture. When the above range is satisfied, the stability of foaming can be further enhanced when a polyurethane foam is formed.

In addition, the polyester polyol mixture may further comprise a crosslinking agent to enhance the uniformity and stability of a polyurethane foam. The crosslinking agent may be glycerin, ethylene glycol, diethylene glycol, thiodiethylene glycol, neopentyl glycol, triethylene glycol, tetraethylene glycol, dipropylene glycol, tripropylene glycol, pentaerythritol, or a mixture thereof, but it is not limited thereto. In addition, the content of the crosslinking agent may be 0.5 to 15% by weight, 0.5 to 13% by weight, 1 to 10% by weight, 2 to 10% by weight, or 3 to 8% by weight, based on the total weight of the polyester polyol mixture.

In addition, the polyester polyol mixture may further comprise a flame retardant in order to suppress combustion reactions and generate non-flammable gases through decomposition and combustion reactions. The flame retardant may be, for example, a phosphorus-based flame retardant, a halogen-based flame retardant, or a mixture thereof. For example, the flame retardant may comprise at least one selected from the group consisting of tris(2-chloropropyl)phosphate (TCPP), tris(2-chloroethyl)phosphate (TCEP), triethylphosphate (TEP), tris(2,4-dichloropropyl)phosphate, chlorinated organic polyphosphate, and tris(polyoxyalkylene)phosphate. In addition, the content of the flame retardant may be 0.5 to 25% by weight, 3 to 22% by weight, 5 to 20% by weight, 8 to 20% by weight, or 10 to 20% by weight, based on the total weight of the polyester polyol mixture. When the above range is satisfied, the flame retardancy of a polyurethane foam can be further enhanced.

The content of the polyester polyol may be 50 to 80% by weight based on the total weight of the polyester polyol mixture. Specifically, the content of the polyester polyol may be, for example, 50 to 75% by weight or, for example, 55 to 70% by weight, based on the total weight of the polyester polyol mixture.

The process for preparing a polyurethane foam (S100) may comprise reacting the polyester polyol mixture with an isocyanate to obtain a polyurethane foam (S 130).

The isocyanate may comprise at least one selected from the group consisting of diphenylmethane diisocyanate, toluene diisocyanate, naphthylene diisocyanate, phenylene diisocyanate, methylene diisocyanate, hexamethylene diisocyanate, hexanediol diisocyanate, cyclohexane diisocyanate, isophorone diisocyanate, xylene diisocyanate, tetramethylxylene diisocyanate, and triphenylmethane triisocyanate.

The equivalent ratio of the polyester polyol mixture and the isocyanate may be, for example, 1:2 to 4, for example, 1:2.5 to 3.8, for example, 1:2.5 to 3.5, or, for example, 1:3.

According to an embodiment of the present invention, the total amount of heat released ($T_{HR}$) and the total amount of smoke released ($T_{SR}$) of the polyurethane foam may vary depending on the equivalent ratio of the polyester polyol mixture and the isocyanate.

For example, when the equivalent ratio of the polyester polyol mixture and the isocyanate is about 1:2, the total amount of heat released ($T_{HR}$) may be, for example, 9.0 MJ/m$^2$ or less, 8.8 MJ/m$^2$ or less, or 8.6 MJ/m$^2$ or less, specifically, about 7.8 MJ/m$^2$ to 8.7 MJ/m$^2$ or about 8.2 MJ/m$^2$ to 8.7 MJ/m$^2$.

For example, when the equivalent ratio of the polyester polyol mixture and the isocyanate is about 1:3, the total amount of heat released ($T_{HR}$) may be, for example, 9.3 MJ/m$^2$ or less, 9.0 MJ/m$^2$ or less, or 8.8 MJ/m$^2$ or less, specifically, about 8.0 MJ/m$^2$ to 9.3 MJ/m$^2$ or greater than about 8.7 MJ/m$^2$ to 9.3 MJ/m$^2$.

For example, when the equivalent ratio of the polyester polyol mixture and the isocyanate is about 1:4, the total amount of heat released ($T_{HR}$) may be, for example, 10.0 MJ/m$^2$ or less, 9.8 MJ/m$^2$ or less, or 9.7 MJ/m$^2$ or less, specifically, about 9.0 MJ/m$^2$ to 10.0 MJ/m$^2$ or greater than about 9.3 MJ/m$^2$ to 9.8 MJ/m$^2$.

In addition, for example, when the equivalent ratio of the polyester polyol mixture and the isocyanate is about 1:2, the total amount of smoke released ($T_{SR}$) may be, for example, 32 m$^2$/m$^2$ or less, 30 m$^2$/m$^2$ or less, 29 m$^2$/m$^2$ or less, specifically, about 20 m$^2$/m$^2$ to 32 m$^2$/m$^2$ or about 20 m$^2$/m$^2$ to 30 m$^2$/m$^2$.

For example, when the equivalent ratio of the polyester polyol mixture and the isocyanate is about 1:3, the total amount of smoke released ($T_{SR}$) may be, for example, 40 m$^2$/m$^2$ or less, 36 m$^2$/m$^2$ or less, 32 m$^2$/m$^2$ or less, specifically, about 25 m$^2$/m$^2$ to 40 m$^2$/m$^2$ or about 25 m$^2$/m$^2$ to 36 m$^2$/m$^2$.

When the equivalent ratio of the polyester polyol mixture and the isocyanate is about 1:4, the total amount of smoke released ($T_{SR}$) may be, for example, 50 m$^2$/m$^2$ or less, 48 m$^2$/m$^2$ or less, 47 m$^2$/m$^2$ or less, specifically, about 30 m$^2$/m$^2$ to 50 m$^2$/m$^2$ or greater than about 32 m$^2$/m$^2$ to 48 m$^2$/m$^2$.

According to an embodiment, the content of the isocyanate may be 50 to 80% by weight, 40 to 70% by weight, 45 to 70% by weight, 50 to 70% by weight, or 55 to 65% by weight, based on the sum of the total weight of the polyester polyol mixture and the isocyanate.

The reaction between the polyester polyol mixture and the isocyanate may be carried out through a chemical reaction by mixing them at 20 to 25°C with high-speed stirring. Specifically, the reaction between the polyester polyol mixture and the isocyanate may be carried out through a chemical reaction at about 20 to 25°C for 5 to 10 seconds using a high-speed stirrer with high-speed stirring at a speed of about 5,000 to 7,000 rpm.

The process for preparing a polyurethane foam according to an embodiment can provide a polyurethane foam having the above excellent effects in a simple, economical, and efficient manner.

The polyurethane foam can be used in a variety of ways, such as architectural insulation, industrial insulation, home appliances, automobiles, ships, pipes, sound-absorbing materials, and insulation materials. It can enhance flame retardancy and thermal resistance at the same time. In particular, it can be advantageously used since the total amount of heat released and the total amount of smoke released during combustion are low, which not only has a fire prevention effect but also reduces the generation of toxic gases.

**Mode for Carrying out the Invention**

Hereinafter, the embodiments will be described in detail with reference to examples. The following Examples are intended to further illustrate the present invention without limiting its scope.

**<Example>**

**Preparation of a polyurethane foam**

**Example 1**

**Step 1: Obtaining a polyester polyol (S110)**

A four-neck flask equipped with a condenser, a stirrer, and a temperature controller was placed on a heating mantle. The flask was charged with isophthalic acid (IPA) and phthalic acid (PA) as aromatic carboxylic acids at a molar ratio of about 9:1 and diethylene glycol (DEG) as an alcohol. In such an event, the equivalent ratio of the aromatic carboxylic acids and the alcohol was about 1:1.25.

The composition comprising the aromatic carboxylic acids and the alcohol was subjected to a polycondensation reaction at about 230°C for about 18 hours to obtain a polyester polyol.

**Step 2: Obtaining a polyester polyol mixture (S120)**

A polyester polyol mixture was obtained by mixing about 68% by weight of the polyester polyol obtained in step 1, about 0.2% by weight of a tertiary amine catalyst (Polycat 8, EVONIK), and about 1.4% by weight of a metal catalyst (Dabco T 45, EVONIK), about 1.4% by weight of a foam stabilizer (L6900, Momentive), about 19% by weight of a phosphorus-based flame retardant (TCPP), and about 10% by weight of a foaming agent (C-pentane), based on the total weight of the polyester polyol mixture.

**Step 3: Obtaining a polyurethane foam (S130)**

The polyester polyol mixture obtained in step 2 and an isocyanate (MDI, Kumho Mitsui SR550) at an equivalent ratio of 1:3 were injected into a mold having a size of 200 × 200 × 200 mm, and a chemical reaction was carried out at about 25°C for about 7 seconds with high-speed stirring at a speed of about 7,000 rpm.

**Examples 2 to 7**

A polyurethane foam was prepared in the same manner as in Example 1, except that the equivalent ratio of the aromatic carboxylic acids and the alcohol in step 1 of Example 1 was changed as shown in Table 1 below.

**Comparative Example 1**

A polyurethane foam was prepared in the same manner as in Example 1, except that the molar ratio of IPA and PA as aromatic carboxylic acids and the equivalent ratio of the aromatic carboxylic acids and the alcohol in step 1 of Example 1 were changed as shown in Table 1 below.

**Comparative Example 2**

A polyurethane foam was prepared in the same manner as in Comparative Example 1, except that terephthalic acid (TPA) and PA were used as aromatic carboxylic acids instead of IPA and PA; and the contents thereof and the equivalent ratio of the aromatic carboxylic acids and the alcohol in step 1 of Comparative Example 1 were changed as shown in Table 1 below.

**Comparative Example 3**

A polyurethane foam was prepared in the same manner as in Comparative Example 1, except that PA and dimethyl terephthalate (DMT) were used as aromatic carboxylic acids instead of IPA and PA; and the contents thereof and the equivalent ratio of the aromatic carboxylic acids and the alcohol in step 1 of Comparative Example 1 were changed as shown in Table 1 below.

**Comparative Example 4**

A polyurethane foam was prepared in the same manner as in Comparative Example 1, except that PA and polyethylene terephthalate (PET) were used as aromatic carboxylic acids instead of IPA and PA; and the contents thereof and the equivalent ratio of the aromatic carboxylic acids and the alcohol in step 1 of Comparative Example 1 were changed as shown in Table 1 below.

**Comparative Example 5**

A polyurethane foam was prepared in the same manner as in Comparative Example 1, except that IPA alone was used as an aromatic carboxylic acid, and the equivalent ratio of the aromatic carboxylic acid and the alcohol in step 1 of Comparative Example 1 was changed as shown in Table 1 below.

**Comparative Example 6**

A polyurethane foam was prepared in the same manner as in Comparative Example 1, except that PA alone was used as an aromatic carboxylic acid, and the equivalent ratio of the aromatic carboxylic acid and the alcohol in step 1 of Comparative Example 1 was changed as shown in Table 1 below.

[Table 1]

| | | Example | | | | | | | Comparative Example | | | | | |
|---|---|---|---|---|---|---|---|---|---|---|---|---|---|---|
| | | 1 | 2 | 3 | 4 | 5 | 6 | 7 | 1 | 2 | 3 | 4 | 5 | 6 |
| Polyester polyol | Aromatic carboxylic acid (molar ratio) | IPA/PA (9: 1) | | | | | | | IPA/PA (8:2) | TPA/PA (9:1) | PA/IMT (9:1) | PA/PET (8:2) | IPA (single) | PA (single) |
| | Equivalent ratio of aromatic carboxylic acid: alcohol (DEG) | 1: 1.25 | 1: 1.5 | 1: 1.6 | 1: 1.75 | 1: 1.85 | 1: 1.95 | 1: 2.2 | 1:1.85 | 1:1.85 | 1:2.0 | 1:1.9 | 1:2.0 | 1:1.9 |
| Polyester polyol mixture:isocyanate (equivalent ratio) | | 1:3 | | | | | | | | | | | | |

**Test Example**

**Test Example 1: Measurement of hydroxyl value (OHv)**

The hydroxyl value (OHv) refers to the number of mg of NaOH required to neutralize acetic acid bound to a hydroxyl group when acetylating 1 g of a sample. It may be measured according to ASTM E222-10.

**Test Example 2: Measurement of temperature ($T_{50}$, °C) when weight reduction is 50%**

While a polyester polyol or a polyurethane foam was heated from room temperature to 800°C at a temperature elevation rate of about 20°C/minute using a thermogravimetric analyzer (TGA), the temperature (°C) at which the weight reduction thereof was 50% was measured.

**Test Example 3: Measurement of weight residual ratio ($WR_{600}$)**

The initial weight at 25°C of the polyurethane foam prepared in the Examples and Comparative Examples and the weight of the polyurethane foam thereof immediately after standing at about 600°C for about 2 minutes under a nitrogen atmosphere were measured using a thermogravimetric analyzer (TGA). The weight residual ratio was calculated according to the following Equation 3.

[Equation 3]

$$Weight\ residual\ ratio\ (WR_{600}, \%) = \frac{W_{25} - W_{600}}{W_{25}} \times 100$$

In Equation 3,
$W_{25}$ is the initial weight of a polyurethane foam at 25°C, and $W_{600}$ is the weight of the polyurethane foam after the temperature is raised from 25°C to 600°C at a rate of 20°C/minute and it stands at 600°C for 2 minutes.

**Test Example 4: Measurement of the total amount of heat released**

The total amount of heat released ($T_{HR}$, $MJ/m^2$) for 10 minutes after the initiation of heating at 50 $kW/m^2$ was measured using a cone calorimeter tester according to ISO 5660-1.

**Test Example 5: Measurement of the total amount of smoke released**

The total amount of smoke released ($T_{SR}$, $m^2/m^2$) for 10 minutes after the initiation of heating at 50 $kW/m^2$ was measured using a cone calorimeter tester according to ISO 5660-1.

**Test Example 6: Evaluation of flame retardant index (FRI)**

The polyurethane foams prepared in the Examples and Comparative Examples were each made into a size of about 100 mm in width × about 100 mm in length × about 50 mm in thickness. The total amount of heat released ($MJ/m^2$) and the total amount of smoke released ($m^2/m^2$) for 10 minutes after the initiation of heating at 50 $kW/m^2$ were each measured using a cone calorimeter tester according to ISO 5660-1. The flame retardant index was calculated according to the following Equation 1.

[Equation 1]

$$FRI = T_{HR} + T_{SR}$$

In Equation 1,

$T_{HR}$ and $T_{SR}$ are values, excluding units, measured with a specimen comprising a polyurethane foam having a size of 100 mm in width × 100 mm in length × 50 mm in thickness, respectively.
$T_{HR}$ is the total amount of heat released ($MJ/m^2$) for 10 minutes after the initiation of heating at 50 $kW/m^2$ using a

cone calorimeter tester according to ISO 5660-1, and $T_{SR}$ is the total amount of smoke released ($m^2/m^2$) for 10 minutes after the initiation of heating at 50 kW/$m^2$ using a cone calorimeter tester according to ISO 5660-1.

**Test Example 7: Evaluation of thermal stabilization index (TSI)**

Thermal stabilization index (TSI) was calculated according to the following Equation 2 using the flame retardant index (FRI) of each of the polyurethane foam prepared in the Examples and Comparative Examples and the temperature ($T_{50}$, °C) when the weight reduction of the polyurethane foam was about 50%.

[Equation 2]

$$Thermal\ stabilization\ index\ (TSI) = \frac{FRI}{T_{50}} \times 100$$

In Equation 2,

FRI stands for the flame retardant index of the above Equation 1.
$T_{50}$ is the temperature (°C) at which the weight reduction of the polyurethane foam is 50% when the polyurethane foam is heated from room temperature to 800°C at a temperature elevation rate of 20°C/minute using a thermogravimetric analyzer (TGA), which is a value excluding a unit.

The results of Test Examples 1 to 7 are shown in Table 2 below.

[Table 2]

| | Example | | | | | | | Comparative Example | | | | | |
|---|---|---|---|---|---|---|---|---|---|---|---|---|---|
| | 1 | 2 | 3 | 4 | 5 | 6 | 7 | 1 | 2 | 3 | 4 | 5 | 6 |
| OHv (mg KOH/g) | 150 | 200 | 220 | 250 | 280 | 300 | 360 | 250 | 250 | 250 | 250 | 250 | 250 |
| $T_{50}$ (°C) | 464.3 | 473.7 | 486.3 | 484.5 | 474.8 | 471.4 | 467.2 | 455.3 | 457.8 | 452.2 | 460.4 | 462.5 | 446.7 |
| $WR_{600}$ (%) | 39.9 | 40.4 | 40.7 | 40.8 | 40 | 40.4 | 40 | 39.3 | 38.8 | 37.7 | 38.3 | 39.5 | 37.2 |
| Total amount of heat released ($T_{HR}$) (MJ/m$^2$) | 11.5 | 8.8 | 8.9 | 9.1 | 9.5 | 9.7 | 10.3 | 14.5 | 14.9 | 16.5 | 15.2 | 12.5 | 18.9 |
| Total amount of smoke released ($T_{SR}$) (m$^2$/m$^2$) | 98 | 76 | 79 | 85 | 103 | 115 | 122 | 130 | 123 | 230 | 190 | 128 | 265 |
| FRI ($T_{HR}$ + $T_{SR}$) | 109.5 | 84.8 | 87.9 | 94.1 | 112.5 | 124.7 | 124.7 | 144.5 | 137.9 | 246.5 | 205.2 | 127.5 | 283.9 |
| TSI (FRI/$T_{50}$×100) | 23.58 | 17.90 | 18.08 | 19.42 | 23.69 | 26.45 | 28.32 | 31.74 | 30.1 | 54.5 | 44.6 | 30.38 | 63.6 |

As can be seen from Table 2 above, the polyurethane foam prepared according to the Examples had excellent flame retardant index (FRI) and thermal stabilization index (TSI) within the appropriate ranges, whereby thermal resistance and flame retardancy were enhanced at the same time. In particular, the weight residual ratio ($WR_{600}$) of the polyurethane foam after standing at 600°C was 39% or more, and the total amount of heat released and the total amount of smoke released during combustion were very low.

Specifically, in the polyurethane foams of Examples 1 to 7, the flame retardant index (FRI) was 130 or less, the thermal stabilization index (TSI) was 30 or less, the weight residual ratio ($WR_{600}$) of polyurethane foam after standing at 600°C was 39% or more, and the total amount of heat released and the total amount of smoke released during combustion were very low at 8 to 12 $MJ/m^2$ and 125 $m^2/m^2$ or lower, as compared with the polyurethane foams of Comparative Examples 1 to 6.

In contrast, in the polyurethane foams of Comparative Examples 2 to 6, in which at least two aromatic carboxylic acids comprising IPA and PA were not used, the flame retardant index exceeded 130 in most cases, the thermal stabilization index exceeded 30, the total amount of heat released during combustion exceeded 14.9 $MJ/m^2$ in most cases, and the total amount of smoke released was very high at 128 $m^2/m^2$ or more in most cases.

Meanwhile, in the polyurethane foam of Comparative Example 5, in which IPA was used alone as an aromatic carboxylic acid, the total amount of heat released and the total amount of smoke released during combustion were increased.

In addition, in the polyurethane foam of Comparative Example 6, in which PA was used alone as an aromatic carboxylic acid, the weight residual ratio ($WR_{600}$) of polyurethane foam after standing at 600°C was significantly reduced to 37.2%, the total amount of smoke released and the total amount of heat released were each about 265 $m^2/m^2$ and 18.9 $MJ/m^2$, which were significantly increased as compared with the polyurethane form of Example 2 in which the total amount of smoke released was about 76 $m^2/m^2$, and the total amount of heat released was 8.8 $MJ/m^2$.

In addition, in the polyurethane foam of Example 7, in which at least two aromatic carboxylic acids comprising IPA and PA were used whereas the polyester polyol had an excessive hydroxyl value (OHv) of 360 mg KOH/g, the thermal resistance and flame retardancy were excellent as compared with the polyurethane foams of Comparative Examples 1 to 6, while the thermal resistance and flame retardancy were slightly reduced as compared with Examples 1 to 6 in which the hydroxyl value (OHv) of the polyester polyol was 150 to 350 mg KOH/g.

Meanwhile, the changes in the total amount of heat released and the total amount of smoke released of the polyurethane foam were checked according to the equivalent ratio of the polyester polyol mixture and the isocyanate. The results are shown in Table 3 below.

[Table 3]

| Equivalent ratio of the polyester polyol mixture and isocyanate | 1:2 | 1:3 | 1:4 |
|---|---|---|---|
| Total amount of heat released ($T_{HR}$) ($MJ/m^2$) | 8.6 | 8.8 | 9.7 |
| Total amount of smoke released ($T_{SR}$) ($m^2/m^2$) | 28.8 | 30.4 | 46.2 |

As can be seen from Table 3 above, the total amount of heat released and the total amount of smoke released were increased as the equivalent ratio of the polyester polyol mixture and the isocyanate was increased from 1:2 to 1:4.

Meanwhile, the thermal resistance of the polyester polyol itself was checked according to the hydroxyl value (OHv) of the polyester polyol and the type of the aromatic carboxylic acid. The results are shown in Tables 4 and 5 below.

Here, in Tables 4 and 5, since errors may occur each time thermal resistance was measured, all five test groups regarding the thermal resistance of the polyester polyol according to OHv in Table 4 were measured on the same day; and the all four test groups regarding the thermal resistance of the polyester polyol according to the type of aromatic carboxylic acid in Table 5 were measured on the same day.

[Table 4]

| Thermal resistance of the polyester polyol itself according to OHv | | | | | |
|---|---|---|---|---|---|
| OHv (mg KOH/g) | 150 | 200 | 250 | 300 | 350 |
| $T_{50}$ (°C) | 416.8 | 417.7 | 411.3 | 403.4 | 402.7 |

As can be seen from Table 4 above, when the polyester polyol was heated from room temperature to 800°C at a temperature elevation rate of 20°C/minute using a thermogravimetric analyzer (TGA), the temperature (°C) at which the weight reduction thereof was 50% was overall lowered as the hydroxyl value (OHv) of the polyester polyol was increased.

[Table 5]

| Thermal resistance of the polyester polyol itself according to the type of aromatic carboxylic acid | | | | |
|---|---|---|---|---|
| Aromatic carboxylic acid | IPA and PA | TPA and PA | PA and DMT | PA and PET |
| OHv (mg KOH/g) | 250 | | | |
| $T_{50}$ (°C) | 422.1 | 408.3 | 405.7 | 409.5 |

As can be seen from Table 5 above, when the polyester polyol was heated from room temperature to 800°C at a temperature elevation rate of 20°C/minute using a thermogravimetric analyzer (TGA), the temperature (°C) at which the weight reduction thereof was 50% varied depending on the type of aromatic carboxylic acid in the composition forming the polyester polyol.

Specifically, in polyester polyol formed from a composition in which the hydroxyl value (OHv) of the polyester polyol was adjusted to 250 mg KOH/g and two types of aromatic carboxylic acids comprising IPA and PA were used, the temperature (°C) at which the weight reduction of the polyester polyol was 50% was significantly enhanced to 422.1°C, resulting in enhanced thermal resistance of the polyester polyol, as compared with the polyester polyols formed from compositions comprising two types of aromatic carboxylic acid, comprising TPA and PA, PA and DMT, and PA and PET, respectively.

## Claims

1. A polyurethane foam, which is a reaction product of a polyester polyol and an isocyanate,
   wherein the polyester polyol is formed from a composition comprising two or more aromatic carboxylic acids comprising isophthalic acid and phthalic acid, and an alcohol, and the flame retardant index (FRI) represented by the following Equation 1 is 130 or less:

$$[\text{Equation 1}]$$

$$FRI = T_{HR} + T_{SR}$$

in Equation 1,

   $T_{HR}$ and $T_{SR}$ are values, excluding units, measured with a specimen containing a polyurethane foam having a size of 100 mm in width × 100 mm in length × 50 mm in thickness, respectively,
   $T_{HR}$ is the total amount of heat released (MJ/m$^2$) for 10 minutes after the initiation of heating at 50 kW/m$^2$ using a cone calorimeter tester according to ISO 5660-1, and
   $T_{SR}$ is the total amount of smoke released (m$^2$/m$^2$) for 10 minutes after the initiation of heating at 50 kW/m$^2$ using a cone calorimeter tester according to ISO 5660-1.

2. The polyurethane foam of claim 1, wherein the polyurethane foam has a thermal stabilization index (TSI) of 30 or less as represented by the following Equation 2:

$$[\text{Equation 2}]$$

$$Thermal\ stabilization\ index\ (TSI) = \frac{FRI}{T_{50}} \times 100$$

in Equation 2,
FRI is as defined above, and $T_{50}$ is the temperature (°C) at which the weight reduction of the polyurethane foam is 50% when the polyurethane foam is heated from room temperature to 800°C at a temperature elevation rate of 20°C/minute using a thermogravimetric analyzer (TGA), which is a value excluding a unit.

3. The polyurethane foam of claim 2, wherein the polyurethane foam has a weight residual ratio ($WR_{600}$) of 38% or more as represented by the following Equation 3:

[Equation 3]

$$Weight\ residual\ ratio\ (WR_{600}, \%) = \frac{W_{25} - W_{600}}{W_{25}} \times 100$$

in Equation 3,
$W_{25}$ is the initial weight of the polyurethane foam at 25°C, and $W_{600}$ is the weight of the polyurethane foam after the temperature is raised from 25°C to 600°C at a rate of 20°C/minute and it stands at 600°C for 2 minutes.

4. The polyurethane foam of claim 2, wherein the $T_{HR}$ is 8 MJ/m$^2$ to 12 MJ/m$^2$, the $T_{SR}$ is 125 m$^2$/m$^2$ or less, and the $T_{50}$ is 460°C to 600°C.

5. The polyurethane foam of claim 1, wherein the polyester polyol has a hydroxyl value (OHv) of 150 mg KOH/g to 380 mg KOH/g and an average of 2 to 2.5 functional groups.

6. The polyurethane foam of claim 2, wherein, when the hydroxyl value (OHv) of the polyester polyol is 250 mg KOH/g, the polyurethane foam satisfies at least one of the following characteristics:

   the FRI is less than 100,
   the TSI is 20 or less,
   the $T_{HR}$ is 8.5 MJ/m$^2$ to 9.5 MJ/m$^2$,
   the $T_{SR}$ is 78 m$^2$/m$^2$ to less than 100 m$^2$/m$^2$, and
   the $T_{50}$ is 450°C to 500°C.

7. The polyurethane foam of claim 1, wherein, when the polyester polyol is heated from room temperature to 800°C at a temperature elevation rate of 20°C/minute using a thermogravimetric analyzer (TGA), the temperature (°C) at which the weight reduction of the polyester polyol is 50% is 380°C to 450°C.

8. A process for preparing a polyurethane foam, which comprises:

   polycondensing a composition comprising two or more aromatic carboxylic acids comprising isophthalic acid and phthalic acid, and an alcohol to obtain a polyester polyol;
   mixing the polyester polyol with a catalyst, a foam stabilizer, and a foaming agent to obtain a polyester polyol mixture; and
   reacting the polyester polyol mixture with an isocyanate to obtain a polyurethane foam,
   wherein the flame retardant index (FRI) represented by the above Equation 1 is 130 or less:

[Equation 1]

$$FRI = T_{HR} + T_{SR}$$

in Equation 1,

   $T_{HR}$ and $T_{SR}$ are values, excluding units, measured with a specimen containing a polyurethane foam having a size of 100 mm in width × 100 mm in length × 50 mm in thickness, respectively,
   $T_{HR}$ is the total amount of heat released (MJ/m$^2$) for 10 minutes after the initiation of heating at 50 kW/m$^2$ using a cone calorimeter tester according to ISO 5660-1, and
   $T_{SR}$ is the total amount of smoke released (m$^2$/m$^2$) for 10 minutes after the initiation of heating at 50 kW/m$^2$ using a cone calorimeter tester according to ISO 5660-1.

9. The process for preparing a polyurethane foam of claim 8, wherein the polycondensation reaction is carried out at 180 to 250°C for 6 to 24 hours.

**10.** The process for preparing a polyurethane foam of claim 8, wherein the equivalent ratio of the polyester polyol mixture and the isocyanate is 1:2 to 1:4, and
the reaction between the polyester polyol mixture and the isocyanate is carried out by mixing them at 20 to 25°C with high-speed stirring.

**11.** The process for preparing a polyurethane foam of claim 8, wherein the aromatic carboxylic acids comprise isophthalic acid and phthalic acid at a molar ratio of 7.5 to 9.5:0.5 to 2.5, and the equivalent ratio of the aromatic carboxylic acids and the alcohol is 1: 1.2 to 2.5.

**12.** The process for preparing a polyurethane foam of claim 8, wherein the content of the polyester polyol is 50 to 80% by weight based on the total weight of the polyester polyol mixture.

[Fig. 1]

**S100**

S110

Polycondensing a composition comprising two or more aromatic carboxylic acids and an alcohol to obtain a polyester polyol

S120

Mixing the polyester polyol with a catalyst, a foam stabilizer, and a foaming agent to obtain a polyester polyol mixture

S130

Reacting the polyester polyol mixture with an isocyanate to obtain a polyurethane foam

Preparation of a polyurethane foam

<div align="center">

**INTERNATIONAL SEARCH REPORT**

</div>

| | |
|---|---|
| International application No. |
| **PCT/KR2022/007922** |

### A. CLASSIFICATION OF SUBJECT MATTER

**C08G 18/42**(2006.01)i; **C08G 18/10**(2006.01)i

According to International Patent Classification (IPC) or to both national classification and IPC

### B. FIELDS SEARCHED

Minimum documentation searched (classification system followed by classification symbols)

C08G 18/42(2006.01); C08G 18/00(2006.01); C08G 18/16(2006.01); C08G 18/26(2006.01); C08G 18/32(2006.01); C08G 18/40(2006.01); C08G 18/65(2006.01); C08G 83/00(2006.01); C09K 21/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리우레탄 폼(polyurethane foam), 폴리에스터 폴리올(polyester polyol), 이소시아네이트(isocyanate), 이소프탈산(isophthalic acid), 프탈산(phthalic acid), 난연 지수(flame retardant index)

### C. DOCUMENTS CONSIDERED TO BE RELEVANT

| Category* | Citation of document, with indication, where appropriate, of the relevant passages | Relevant to claim No. |
|---|---|---|
| Y | JP 2002-121252 A (BASF INOAC POLYURETHANES LTD. et al.) 23 April 2002 (2002-04-23)<br>See claim 1; paragraphs [0007]-[0026]; and table 1. | 1-12 |
| Y | WO 2020-160206 A1 (DOW GLOBAL TECHNOLOGIES LLC) 06 August 2020 (2020-08-06)<br>See claims 1-6; paragraphs [0006]-[0075]; and table 1. | 1-12 |
| A | WO 2020-110332 A1 (ASAHI YUKIZAI CORPORATION) 04 June 2020 (2020-06-04)<br>See entire document. | 1-12 |
| A | WO 2008-124871 A1 (ADVANCED TIMBER TECHNOLOGIES PTY LTD.) 23 October 2008 (2008-10-23)<br>See entire document. | 1-12 |
| A | JP 2005-350637 A (KANAI EDUCATIONAL INSTITUTION) 22 December 2005 (2005-12-22)<br>See entire document. | 1-12 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **08 September 2022** | **08 September 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/007922**

| Patent document cited in search report | | | Publication date (day/month/year) | Patent family member(s) | | | Publication date (day/month/year) |
|---|---|---|---|---|---|---|---|
| JP | 2002-121252 | A | 23 April 2002 | None | | | |
| WO | 2020-160206 | A1 | 06 August 2020 | CN | 113286834 | A | 20 August 2021 |
| | | | | EP | 3917982 | A1 | 08 December 2021 |
| | | | | US | 2022-0098358 | A1 | 31 March 2022 |
| WO | 2020-110332 | A1 | 04 June 2020 | CN | 113015757 | A | 22 June 2021 |
| | | | | JP | 6621571 | B1 | 18 December 2019 |
| | | | | KR | 10-2021-0095852 | A | 03 August 2021 |
| WO | 2008-124871 | A1 | 23 October 2008 | None | | | |
| JP | 2005-350637 | A | 22 December 2005 | None | | | |

Form PCT/ISA/210 (patent family annex) (July 2019)

**EP 4 353 764 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101876936